# EUROPEAN PATENT SPECIFICATION

(11) **EP 2 816 791 B1**
(45) Date of publication and mention of the grant of the patent: **27.12.2017**
(21) Application number: 12869113.6
(22) Date of filing: 21.02.2012
(51) Int. Cl.: H04M 13/00

(54) **MULTI-PATH SPEECH SIGNAL MULTIPLEXING CIRCUIT, EQUIPMENT AND METHOD**
MEHRWEG-SPRACHSIGNALMULTIPLEXSCHALTUNG, AUSRÜSTUNG UND VERFAHREN
CIRCUIT, ÉQUIPEMENT ET PROCÉDÉ DE MULTIPLEXAGE DE SIGNAL VOCAL À TRAJETS MULTIPLES

(43) Date of publication of application: 24.12.2014
(73) Proprietor: Huawei Technologies Co., Ltd., Longgang District Shenzhen, Guangdong 518129 (CN)
(72) Inventor: WANG, Huan, Shenzhen Guangdong 518129 (CN); WANG, Xiaoduan, Shenzhen Guangdong 518129 (CN)
(74) Representative: Thun, Clemens
(86) International application number: PCT/CN2012/071404
(87) International publication number: WO 2013/123645

(56) References cited:
- CN-A- 101 494 916
- CN-A- 101 854 443
- JP-A- 2001 268 225
- US-A1- 2004 093 450

## Description

### TECHNICAL FIELD

The present invention relates to the field of mobile communications, and in particular, to a technology for multiplexing multiple channels of voice signals.

### BACKGROUND

A serial peripheral interface (Serial Peripheral Interface, SPI) controller can enable a micro control unit (Micro Control Unit, MCU) to communicate with various peripheral devices in a serial manner to exchange information. Currently, MCU hardware resources of devices for multiplexing multiple channels of voice signals are limited, and the number of SPI controllers included on the MCU usually cannot meet design requirements of systems for multiplexing multiple channels of voice signals. When MCU chips are designed for these devices and a primary SPI controller needs to be connected to multiple secondary SPI controllers or multiple peripheral circuits, extension may be performed by means of a field-programmable gate array (Field-Programmable Gate Array, FPGA), but this approach is time-consuming and labor intensive, and makes a cost multiply; or cascading may be performed by using devices that support a daisy chain, but relatively few chips supporting a daisy chain function are now available on the market, and they are highly priced, which is not beneficial to diversification of products and reduction of product costs

For example, US 2004/0093450 A1 refers to a serial device daisy chaining method and apparatus, wherein the method includes the step of serially clocking a mask value through a plurality of subscriber line interface circuits (SLICs) until each SLIC stores a corresponding portion of the mask value, and serially communicating a command to the plurality of SLICs. Each SLIC responds to the command only if enabled by the corresponding portion of the mask value.

### SUMMARY

In view of the foregoing problems, according to one aspect, an embodiment of the present invention provides a circuit for multiplexing multiple channels of voice signals. The circuit includes:
a micro control unit MCU, where the MCU includes at least two general purpose input/output (General Purpose Input Output, GPIO for short) interfaces; and at least two subscriber line interface circuits (Subscriber Line Interface Circuit, SLIC for short), where each of the at least two SLICs includes an enabling CS port;
the enabling (CS) port of each of the at least two SLICs is separately connected to the at least two GPIO interfaces; and
the at least two GPIO interfaces generate an enabling signal, and enable the at least two SLICs in a time division manner by using the CS port of each of the at least two SLICs.

By applying the technical solution provided by this embodiment of the present invention, plenty of GPIO interfaces on an MCU are used to generate enabling signals at enabling ports in SLICs and enable corresponding SLICs in a time division manner, so that the SLICs can process a voice signal of their respective channels, thereby implementing multiplexing of multiple channels of voice signals.

According to another aspect, an embodiment of the present invention provides a user equipment, where the user equipment includes the foregoing circuit for multiplexing multiple channels of voice signals. By using the user equipment, a function of multiplexing multiple channels of voice signals may be implemented, thereby increasing options in selecting SLICs, and reducing a production cost.

According to another aspect, an embodiment of the present invention provides a method for multiplexing multiple channels of voice signals, where the method includes:
generating, by each of at least two GPIO interfaces, an enabling signal, and enabling at least two SLICs in a time division manner; and
processing, by an SLIC that is in an enabled state and among the at least two SLICs, a voice signal of a channel corresponding to the SLIC that is in the enabled state.

The method is applied to a circuit for multiplexing multiple channels of voice signals, and by using the method, multiple channels of voice signals may be multiplexed.

### BRIEF DESCRIPTION OF DRAWINGS

FIG. 1 is a schematic structural diagram of a circuit for multiplexing multiple channels of voice signals;

FIG. 2 is a schematic structural diagram of multiplexing multiple channels of voice signals according to Embodiment 1 of the present invention;

FIG. 3 is a schematic structural diagram of multiplexing multiple channels of voice signals according to Embodiment 2 of the present invention; and

FIG. 4 is a schematic flowchart of a method for multiplexing multiple channels of voice signals according to Embodiment 4 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part of the embodiments of the present invention. A person skilled in the art may implement other embodiments without being limited to these specific details.

An SPI bus system is a synchronous serial peripheral interface, and works in a master-slave mode. In such a mode, there is generally an SPI controller and a chip mounted under the SPI controller. The SPI controller and a slave device connected to the SPI controller may each include an input port (DI), an output port (DO), a clock port (CLK), and an enabling (CS) port. Generally, a clock signal of the slave device is generated by the SPI controller, and an enabling signal at the CS port of the slave device is also generated by the SPI controller.

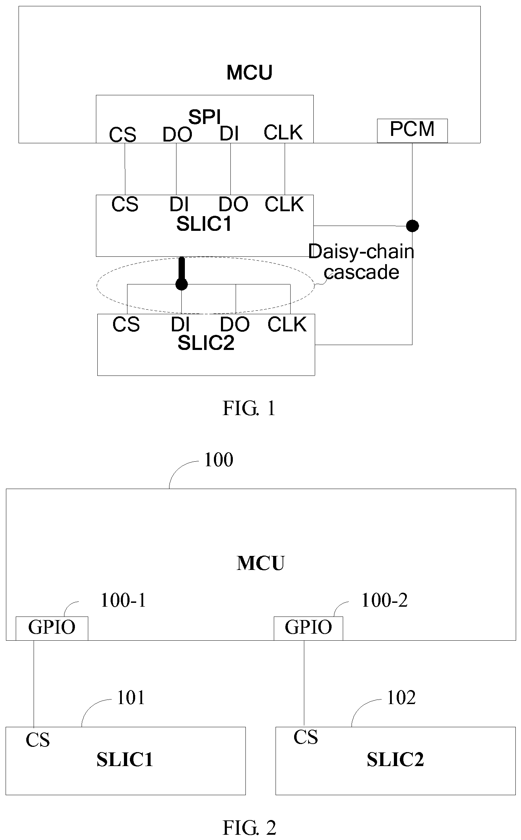

FIG. 1 is a circuit with two SLICs encapsulated into a chip and connected in series in a daisy chain manner to implement multiplexing of multiple channels of voice signals. An MCU includes an SPI controller and a pulse-code modulation (Pulse-Code Modulation, PCM for short) controller. Under the effect of a clock signal sent at a CLK port of the SPI controller and an enabling signal sent at a CS port of the SPI controller, an SLIC1 serves as a slave device of the SPI controller, receives by using a DI port of the SLIC1 a control command sent at a DO port of the SPI controller, and may send, under the control command by using the DI port of the SLIC1, data indicated by the control command back to the DO port of the SPI. The SLIC1 can process only one channel of voice signals at a given point of time. If one more channel of voice signals needs to be processed, a cascade may be performed by daisy chaining an SLIC2 and the SLIC1 as shown in FIG. 1, and time division multiplexing may be performed by using the PCM controller, to implement multiplexing of two channels of voice signals. Further, more SLICs that support the daisy chain manner may be used for cascading, thereby implementing multiplexing of multiple channels of voice signals. A connection manner shown in FIG. 1 requires that an SLIC chip supports the daisy-chain cascade, but relatively few chips supporting the daisy-chain cascade are now available on the market, and they are highly priced, which is not beneficial to diversification of products and reduction of a production cost.

As shown in FIG. 2, Embodiment 1 of the present invention provides a circuit for implementing multiplexing of multiple channels of voice signals. The circuit includes:
an MCU (denoted by 100), where the MCU includes at least two GPIO interfaces 100-1 and 100-2; and
at least two SLICs 101 and 102, where each SLIC includes a CS port; where
the CS port of each SLIC is separately connected to each GPIO interface; and
each GPIO interface generates an enabling signal, and separately enables each SLIC in a time division manner through the CS port of each SLIC.

In Embodiment 1 of the present invention, an SLIC works normally only when in an enabled state. The MCU includes plenty of GPIO interfaces, where the GPIO interfaces can generate an enabling signal, and enable the SLICs to be in the enabled state through the enabling ports (CS) of the SLICs.

When an SLIC among the SLICs is in the enabled state and serves as a sender, the SLIC converts, by means of analog to digital conversion, an analog voice signal of a local user into a PCM digital signal that is suitable for transmission on a public switched telephone network, and sends the PCM digital signal to a candidate receiver. When an SLIC among the SLICs is in the enabled state and serves as a receiver and receives a PCM digital signal sent by another user, the SLIC converts, by means of digital to analog conversion, the received PCM digital signal into an analog voice signal that can be recognized by a local user, and sends the analog voice signal to the local user.

To implement the function of this embodiment of the present invention, some structures may be disposed in the circuit for multiplexing multiple channels of voices described in Embodiment 1 of the present invention. Non-restrictive examples of the structures may include a power supply, a memory, and a circuit for sending an electronic signal, and the like.

By applying the technical solution provided by Embodiment 1 of the present invention, plenty of GPIO interfaces on an MCU are used to generate enabling signals at enabling ports in SLICs and enable the SLICs in a time division manner. In this way, the SLICs are in an active state in the time division manner and process voice signals of channels corresponding to the SLICs. Moreover, in a case in which resources of SPI controllers on the MCU are limited, multiple SLICs are added, to multiplex multiple channels of voice signals.

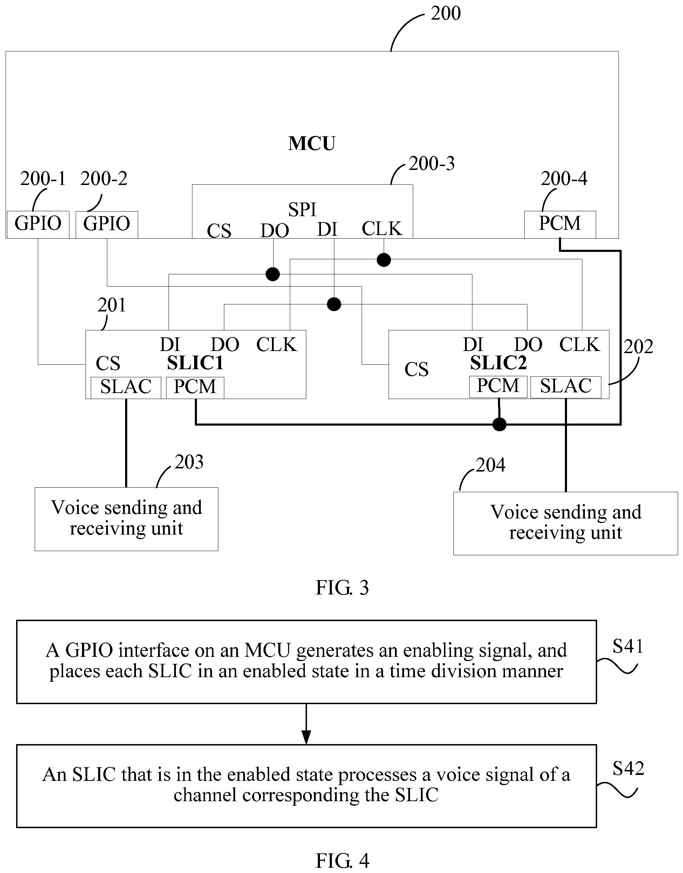

As shown in FIG. 3, Embodiment 2 of the present invention provides a circuit for multiplexing multiple channels of voices. Embodiment 2 of the present invention provides further elaboration based on Embodiment 1 of the present invention.

The circuit includes:
an MCU (denoted by 200), where the MCU 200 includes at least two GPIO interfaces 200-1 and 200-2; at least two SLICs 201 and 202, where each SLIC includes a CS port; and the CS port of each SLIC is separately connected to each GPIO interface.

In Embodiment 2 of the present invention, the MCU 200 further includes: an SPI controller 200-3, where the SPI controller 200-3 includes a DI port, a DO port, and a CLK port of the SPI controller; and a PCM controller 200-4. In Embodiment 2 of the present invention, each SLIC further includes a DI port, a DO port, a CLK port, and a PCM controller of the SLIC. The DI port of each SLIC is connected to the DO port of the MCU, the DO port of each SLIC is connected to the DI port of the MCU, the CLK port of each SLIC is connected to the CLK port of the MCU, and the PCM controller of each SLIC is connected to the PCM controller of the MCU by a PCM bus.

In Embodiment 2 of the present invention, an SLIC works normally only when in an enabled state. The MCU 200 includes plenty of GPIO interfaces, which can generate an enabling signal, and enable, in a time division manner, the SLICs to be in the enabled state through the enabling ports (CS) of the SLICs.

In Embodiment 2 of the present invention, when an SLIC among the SLICs is in the enabled state and serves as a sender, the SLIC converts, by means of analog to digital conversion, an analog voice signal of a local user into a PCM digital signal that is suitable for transmission on a public switched telephone network, and sends the PCM digital signal to a candidate receiver. When an SLIC among the SLICs is in the enabled state and serves as a receiver and receives a PCM digital signal sent by another user, the SLIC converts, by means of digital to analog conversion inside the SLIC, the PCM digital signal into an analog voice signal that can be recognized by a local user, and sends the analog voice signal to the local user.

In Embodiment 2 of the present invention, the SPI controller has at least three signal lines, that is, the DO port, the DI port, and the CLK port of the SPI controller. The CLK port of the SPI controller provides a clock signal for each SLIC in the circuit, and a data transmission rate between the SPI controller and each SLIC is determined by the clock signal generated at the CLK port. When the SPI controller wants to access a particular SLIC, an enabling signal needs to be generated by a GPIO interface of the MCU first, so as to place the SLIC in the enabled state. When the particular SLIC is in the enabled state, that is, the SLIC is accessible to the SPI controller, the SLIC may receive, by using the DI port thereof, a control instruction and information that are sent by the SPI controller, and send back the information by using the DO port thereof. However, an SLIC that is not in the enabled state is in a high resistance state. In Embodiment 2 of the present invention, a GPIO interface is used to generate an enabling signal, so as to place a channel of an SLIC in the enabled state at a given point of time. Under effect of a synchronization clock signal, the SPI controller sends, by using the DO port thereof, instruction and information to the DI port of the SLIC, and performs an operation of writing or reading required data. For different SLICs, instruction systems of SLICs are different, which are not limited herein. When a local user is in an off-hook or on-hook state, information indicating an off-hook or on-hook action in an SLIC changes correspondingly. When a current action is off-hook, the SPI controller is under the effect of a synchronization clock, and the MCU obtains in a polling manner (to read, at a certain time interval, information that is received by the SPI controller and indicates whether the current action is an off-hook or on-hook action) that the current action is an off-hook or on-hook action. If the current action of the user is off-hook, an SLIC has corresponding off-hook information, and the off-hook information is read by the MCU by using the SPI controller. The MCU reads, by using the PCM controller thereof, a PCM digital signal output at the SLIC.

Optionally, in Embodiment 2 of the present invention, functions implemented by the CLK port, the DI port, and the DO port of the SPI controller 200-3 on the MCU 200 may be implemented by the GPIO interfaces on the MCU 200 by generating a corresponding signal. By connecting the GPIO interfaces to the CLK, DI, and DO ports in each SLIC respectively and generating a corresponding timing signal (for example, a clock signal) at the GPIO interfaces, multiplexing of multiple channels of voice signals in Embodiment 2 of the present invention may also be implemented.

Optionally, in Embodiment 2 of the present invention, each SLIC may further include: a subscriber line audio-processing circuit (Subscriber Line Audio-processing Circuit, SLAC for short) controller; and each SLAC is correspondingly connected to a voice sending and receiving unit. An SLAC is configured to receive a voice signal sent by a user by using a voice sending and receiving unit, and send the voice signal to a corresponding SLIC for signal processing. The SLIC performs analog to digital conversion on the voice signal to obtain a PCM digital signal, and sends the PCM digital signal to a candidate receiver. The SLAC is further configured to perform digital to analog conversion on the PCM digital signal received by the SLIC, and send the analog signal converted from the PCM digital signal to the user by using the voice sending and receiving unit. A voice sending and receiving unit is an interface of interaction between a user and the circuit for multiplexing multiple channels of voices, for example, it may be a microphone of a user equipment.

To implement the function of this embodiment of the present invention, some structures may be disposed in the circuit for multiplexing multiple channels of voices described in Embodiment 2 of the present invention. Non-restrictive examples of the structures may include a power supply, a memory, and a circuit for sending an electronic signal, and the like.

By applying the technical solution provided by Embodiment 2 of the present invention, plenty of GPIO interfaces on an MCU are used to generate enabling signals at enabling ports in SLICs and enable corresponding SLICs in a time division manner. In this technical solution, there is no constraint on the number of SPI controllers on the MCU, and due to the use of GPIO interfaces and a new connection manner, SLICs to be selected for use are no longer limited to chips that have daisy chain interfaces, thereby increasing options in selecting SLICs, implementing a function of multiplexing multiple channels of voice signals, and reducing a production cost.

Embodiment 3 of the present invention provides a user equipment, where the user equipment includes the circuit provided by any embodiment of Embodiment 1 of the present invention and Embodiment 2 of the present invention. For details, reference may be made to the circuits described in Embodiment 1 and Embodiment 2 of the present invention. By using the user equipment, a function of multiplexing multiple channels of voice signals can be implemented in the user equipment, thereby increasing options in selecting SLICs, and reducing a production cost.

As shown in FIG. 4, Embodiment 4 of the present invention provides a method for multiplexing multiple channels of voice signals, where the method is applied to the circuit described in Embodiment 1 or Embodiment 2 of the present invention. Some specific content described in Embodiment 1 or Embodiment 2 of the present invention is not described in detail again in Embodiment 4 of the present invention. For details, reference may be made to Embodiment 1 or Embodiment 2 of the present invention. The method includes:

S41. A GPIO interface on an MCU generates an enabling signal, and places each SLIC in an enabled state in a time division manner.

In Embodiment 4 of the present invention, a GPIO interface is used to generate an enabling signal, and only one SLIC is in the enabled state at a given point of time. An enabling signal generated by a particular GPIO places a particular SLIC in the enabled state at a given point of time.

S42. An SLIC that is in the enabled state processes a voice signal of a channel corresponding to the SLIC.

In Embodiment 4 of the present invention, an SLIC works normally only when in the enabled state. An SLIC that is in the enabled state may convert a received voice signal of a local user into a PCM digital signal that is suitable for transmission on a public switched telephone network, or convert a received PCM digital signal sent by a public switched telephone network into a voice signal that may be recognized by a local user.

As an embodiment, an SPI controller has at least three signal lines, that is, a DO port, a DI port, and a CLK port of the SPI controller. The CLK port of the SPI controller provides a clock signal for each SLIC in the circuit, and a data transmission rate between the SPI controller and each SLIC is determined by the clock signal generated at the CLK port. When the SPI controller wants to access a particular SLIC, an enabling signal needs to be generated by a GPIO interface of the MCU first, so as to place the SLIC in the enabled state. When the particular SLIC is in the enabled state, that is, the SLIC is accessible to the SPI controller, the SLIC may receive, by using the DI port thereof, a control instruction and information that are sent by the SPI controller, and send back the information by using the DO port thereof. However, an SLIC that is not in the enabled state is in a high resistance state. In Embodiment 4 of the present invention, a GPIO interface is used to generate an enabling signal, so as to place a channel of an SLIC in the enabled state at a given point of time. The SPI controller sends, by using the DO port thereof, instruction and information to the DI port of the SLIC, and performs an operation of writing or reading the instruction or information. For different SLICs, instruction systems of SLICs are different, which are not limited herein. When a local user is in an off-hook or on-hook state, information stored in the SLIC to indicate an off-hook or on-hook action changes correspondingly. When a current action is off-hook, the SPI controller is under the effect of a synchronization clock, and the MCU obtains in a polling manner (to read, at a certain time interval, information that is received by the SPI controller and indicates whether the current action is an off-hook or on-hook action) that the current action is an off-hook or on-hook action. If the current action of the user is off-hook, an SLIC has corresponding off-hook information, and the off-hook information is read by the MCU by using the SPI controller. The MCU reads, by using the PCM controller thereof, a PCM digital signal output at the SLIC.

Compared with a circuit structure in which a cascade is performed in a daisy chain manner to implement multiplexing of multiple channels of voice signals, the method provided in Embodiment 4 of the present invention implements multiplexing of multiple channels of voice signals, and is not limited by the number of SPI controllers in an embedded chip when a circuit structure thereof is implemented, so that the SPI controller may access more SLICs, thereby increasing options in selecting chips, and reducing a production cost.

In some embodiments, well-known methods, interfaces, and device signaling technologies are not described in detail, so as not to unnecessarily obscure aspects of the present invention. A person of ordinary skill in the art may understand that all or a part of the steps of the methods in the embodiments may be implemented by a program instructing relevant hardware. The program may be stored in a computer readable storage medium, such as a read-only memory (Read-only Memory, ROM), a random access memory (Random Access Memory, RAM), a magnetic disk, or an optical disc.

The foregoing specific embodiments further clarify the objectives, technical solutions, and benefits of the present invention in detail.

## Claims

1. A circuit for multiplexing multiple channels of voice signals, wherein the circuit comprises:
a micro control unit(100; 200), MCU, wherein the MCU comprises at least two general purpose input/output GPIO interfaces(100-1,100-2; 200-1, 200-2); and
at least two subscriber line interface circuits SLICs(101,102; 201, 202), wherein each of the at least two SLICs(101,102; 201, 202) comprises an enabling, CS, port;
the CS port of each of the at least two SLICs(101,102; 201, 202) is separately connected to the at least two GPIO interfaces(100-1,100-2; 200-1, 200-2); and
the at least two GPIO interfaces (100-1,100-2; 200-1, 200-2) generate an enabling signal, **characterized in that** said at least two GPIO interfaces enable the at least two SLICs(101,102; 201, 202) in a time division manner by using the CS port of each of the at least two SLICs(101,102; 201, 202).

2. The circuit according to claim 1, wherein:
the MCU(200) further comprises: a serial peripheral interface, SPI, controller(200-3), wherein the SPI controller(200-3) comprises an input, DI, port, an output, DO, port, and a clock, CLK, port of the SPI controller(200-3); and a pulse-code modulation, PCM, controller(200-4);
each of the at least two SLICs(201, 202) further comprises: a DI port, a DO port, a CLK port, and a PCM controller of the SLIC; and
the DI port of each of the at least two SLICs(201, 202) is connected to the DO port of the MCU(200); the DO port of each of the at least two SLICs(201, 202) is connected to the DI port of the MCU(200); the CLK port of each of the at least two SLICs(201, 202) is connected to the CLK port of the MCU(200); and the PCM controller of each of the at least two SLICs(201,202) is correspondingly connected to the PCM controller(200-4) of the MCU(200).

3. The circuit according to claim 2, wherein:
each of the at least two SLICs(201,202) further comprises: a subscriber line audio-processing circuit, SLAC, controller; and
the circuit further comprises: at least two voice sending and receiving units(203,204), wherein the at least two voice sending and receiving units are connected to the SLAC controllers of the at least two SLICs(201,202) respectively.

4. A user equipment, comprising the circuit according to any one of claims 1 to 3.

5. A method for multiplexing multiple channels of voice signals, the method applied to the circuit according to any one of claims 1 to 3, wherein:
each of the at least two GPIO interfaces(100-1,100-2; 200-1, 200-2) generates an enabling signal, and enables the at least two SLICs(101,102; 201,202) in a time division manner; and
an SLIC that is in an enabled state and among the at least two SLICs(101,102; 201,202) processes a voice signal of a channel corresponding to the SLIC that is in the enabled state.

## Patentansprüche

1. Schaltung zum Multiplexen mehrerer Kanälen von Sprachsignalen, wobei die Schaltung umfasst:
eine Mikrosteuereinheit (100; 200), MCU, wobei die MCU mindestens zwei Universal-Eingangs-/Ausgangs, GPIO,-Schnittstellen (100-1,100-2; 200-1, 200-2) umfasst; und
mindestens zwei Teilnehmerleitungs-Schnittstellenschaltungen, SLICs, (101,102; 201, 202), wobei jede der mindestens zwei SLICs (101,102; 201, 202) einen Aktivierungs, CS,-Port umfasst;
der CS-Port jeder der mindestens zwei SLICs (101,102; 201, 202) separat mit den mindestens zwei GPIO-Schnittstellen (100-1,100-2; 200-1, 200-2) verbunden ist; und
die mindestens zwei GPIO-Schnittstellen (100-1,100-2; 200-1, 200-2) ein Aktivierungssignal erzeugen, **dadurch gekennzeichnet, dass** die mindestens zwei GPIO-Schnittstellen die mindestens zwei SLICs (101,102; 201,202) durch Verwenden des CS-Ports jeder der mindestens zwei SLICs (101,102; 201, 202) in einer Zeitmultiplexweise aktivieren.

2. Schaltung nach Anspruch 1, wobei:
die MCU (200) ferner umfasst: eine serielle Peripherieschnittstellen, SPI,-Steuerung (200-3), wobei die SPI-Steuerung (200-3) einen Eingangs, DI,-Port, einen Ausgangs, DO,-Port, einen Takt, CLK,-Port der SPI-Steuerung (200-3) umfasst; und eine Pulscodemodulations, PCM,-Steuerung (200-4);
jede der mindestens zwei SLICs (201, 202) ferner umfasst: einen DI-Port, einen DO-Port, einen CLK-Port, und eine PCM-Steuerung der SLIC; und
der DI-Port jeder der mindestens zwei SLICs (201, 202) mit dem DO-Port der MCU (200) verbunden ist; der DO-Port jeder der mindestens zwei SLICs (201, 202) mit dem DI-Port der MCU (200) verbunden ist; der CLK-Port der mindestens zwei SLICs (201, 202) mit dem CLK-Port der MCU (200) verbunden ist; und die PCM-Steuerung jeder der mindestens zwei SLICs (201, 202) entsprechend mit der PCM-Steuerung (200-4) der MCU (200) verbunden ist.

3. Schaltung nach Anspruch 2, wobei:
jede der mindestens zwei SLICs (201, 202) ferner umfasst: eine Teilnehmerleitungs-Audioverarbeitungsschaltungs, SLAC,-Steuerung; und
die Schaltung ferner umfasst: mindestens zwei Sprach-Sende- und Empfangseinheiten (203, 204), wobei die mindestens zwei Sprach-Sende- und Empfangseinheiten jeweils mit den SLAC-Steuerungen der mindestens zwei SLICs (201, 202) verbunden sind.

4. Benutzereinrichtung, umfassend die Schaltung nach einem der Ansprüche 1 bis 3.

5. Verfahren zum Multiplexen mehrerer Kanäle von Sprachsignalen, wobei das Verfahren auf die Schaltung nach einem der Ansprüche 1 bis 3 angewendet wird, wobei:
jede der mindestens zwei GPIO-Schnittstellen (100-1,100-2; 200-1, 200-2) ein Aktivierungssignal erzeugt und die mindestens zwei SLICs (101,102; 201,202) in einer Zeitmultiplexweise aktiviert; und
eine SLIC, die in einem aktivierten Zustand ist und unter den mindestens zwei SLICs (101,102; 201, 202) ein Sprachsignal eines Kanals verarbeitet, der der SLIC entspricht, die im aktivierten Zustand ist.

## Revendications

1. Circuit de multiplexage de canaux multiples de signaux vocaux, le circuit comprenant
une micro-unité de commande, MCU, (100 ; 200), la MCU comprenant au moins deux interfaces d'entrée/de sortie polyvalentes, GPIO, (100-1, 100-2 ; 200-1, 200-2) ; et au moins deux circuits d'interface de ligne d'abonné, SLIC, (101, 102 ; 201, 202), chacun des au moins deux SLIC (101, 102 ; 201, 202) comprenant un port d'habilitation, CS ;
le port CS de chacun des au moins deux SLIC (101, 102 ; 201, 202) étant relié séparément aux au moins deux interfaces GPIO (100-1, 100-2 ; 200-1, 200-2) ; et
les au moins deux interfaces GPIO (100-1, 100-2 ; 200-1, 200-2) générant un signal d'habilitation, le circuit étant **caractérisé en ce que** lesdites au moins deux interfaces GPIO habilitent les au moins deux SLIC (101, 102 ; 201, 202) selon un mode de répartition dans le temps au moyen du port CS de chacun des au moins deux SLIC (101, 102 ; 201, 202).

2. Circuit selon la revendication 1, dans lequel :
la MCU (200) comprend en outre : un contrôleur d'interface de périphérique série, SPI, (200-3), le contrôleur SPI (200-3) comprenant un port d'entrée, DI, un port de sortie, DO, et un port d'horloge, CLK, du contrôleur SPI (200-3) ; et un contrôleur de modulation par impulsions et codage, PCM. (200-4) ;
chacun des au moins deux SLIC (201, 202) comprend en outre : un port DI, un port DO, un port CLK, et un contrôleur PCM du SLIC ; et
le port DI de chacun des au moins deux SLIC (201, 202) est relié au port DO de la MCU (200) ; le port DO de chacun des au moins deux SLIC (201, 202) est relié au port DI de la MCU (200) ; le port CLK de chacun des au moins deux SLIC (201, 202) est relié au port CLK de la MCU (200) ; et le contrôleur PCM de chacun des au moins deux SLIC (201, 202) est relié d'une manière correspondante au contrôleur PCM (200-4) de la MCU (200).

3. Circuit selon la revendication 2, dans lequel :
chacun des au moins deux SLIC (201, 202) comprend en outre : un contrôleur de circuit de traitement audio de ligne d'abonné, SLAC ; et
lequel circuit comprend en outre : au moins deux unités d'émission et de réception de la voix (203, 204), les au moins deux unités d'émission et de réception de la voix étant respectivement reliées aux contrôleurs SLAC des au moins deux SLIC (201, 202).

4. Equipement utilisateur, comprenant le circuit selon l'une quelconque des revendications 1 à 3.

5. Procédé de multiplexage de canaux multiples de signaux vocaux, le procédé étant appliqué au circuit selon l'une quelconque des revendications 1 à 3, dans lequel :
chacune des au moins deux interfaces GPIO (100-1, 100-2 ; 200-1, 200-2) génère un signal d'habilitation, et habilite les au moins deux SLIC (101, 102 ; 201, 202) selon un mode de répartition dans le temps ; et
un SLIC qui se trouve dans un état habilité et parmi les au moins deux SLIC (101, 102 ; 201, 202), traite un signal vocal d'un canal correspondant au SLIC qui se trouve dans l'état habilité.
